**Europäisches Patentamt**

**European Patent Office**

**Office européen des brevets**

(19)

(11) Veröffentlichungsnummer : **0 063 717**
**B1**

(12) EUROPÄISCHE PATENTSCHRIFT

(45) Veröffentlichungstag der Patentschrift :
28.05.86

(51) Int. Cl.⁴ : **F 16 H 21/40**

(21) Anmeldenummer : **82102866.9**

(22) Anmeldetag : **03.04.82**

(54) Getriebe zur Ausführung von Bewegungen mit eingeschalteten Stillstandszeiten.

(30) Priorität : 23.04.81 DE 3116172

(43) Veröffentlichungstag der Anmeldung :
03.11.82 Patentblatt 82/44

(45) Bekanntmachung des Hinweises auf die Patenterteilung : 28.05.86 Patentblatt 86/22

(84) Benannte Vertragsstaaten :
CH DE FR GB IT LI

(56) Entgegenhaltungen :
DD-A-    15 342
DE-C-    566 021
DE-C-    670 678
DE-C-    719 040
FEINWERKTECHNIK, Band 54, Nr. 1, 1950, K. Hain:
" Zur Weiterentwicklung der Koppelrastgetriebe ",
Seiten 9-15
Getriebetechnik, Volmer, Berlin 1979, S. 132, 133

(73) Patentinhaber : Heidelberger Druckmaschinen
Aktiengesellschaft
Kurfürsten-Anlage 52-60 Postfach 10 29 40
D-6900 Heidelberg 1 (DE)

(72) Erfinder : Rasenberger, Otto
Martin-Luther-Strasse 7
D-7830 Emmendingen (DE)

(74) Vertreter : Stoltenberg, Baldo Heinz-Herbert
c/o Heidelberger Druckmaschinen AG Kurfürs-
ten-Anlage 52-60
D-6900 Heidelberg 1 (DE)

## Beschreibung

Die Erfindung betrifft ein Getriebe zur Ausführung von Bewegungen mit eingeschalteten Stillstandszeiten, bestehend aus einem schwingfähigen Gelenkviereck mit den zugeordneten Gelenkgliedern, wobei die Koppelkurve nur teilweise durchlaufen wird und im Hin- und Rücklauf deckungsgleich ist sowie einem rasterzeugenden Abtriebszweischlag.

Derartige « Rastgetriebe » werden in vielen Zweigen der Technik verwendet, z. B. bei der Konstruktion hochwertiger Verarbeitungsmaschinen, im Werkzeugmaschinenbau sowie in der Feinmechanik.

Insbesondere bei Druckmaschinen, die als Präzisionsmaschinen für verschiedene Bewegungsabläufe Getriebe mit eingeschalteten Stillstandszeiten benötigen, müssen diese Rasten von ausgesprochener Güte sein. Im Zuge stetiger Produktivitätssteigerung sollen diese Getriebe außerdem für sehr hohe Drehzahlen geeignet sein.

Gerade auf dem letztgenannten Industriezweig wurde bisher sur Lösung entsprechender Aufgaben nahezu ausschließlich auf Kurvengetriebe zurückgegriffen, mit denen konstruktiv jedes beliebige Bewegungsgesetz verwirklicht werden kann, also auch die vielfach geforderte hohe Rastgüte.

Der Abnutzungsgrad solcher Kurvengetriebe ist allerdings schon bei relativ geringen Drehzahlen recht hoch und tritt überdies bei höheren Drehzahlen noch wesentlich stärker in Erscheinung. Weiterhin erfodern derartige Getriebe deshalb eine ständige Überwachung und unterliegen häufig langwierigen, aus Gründen des Verschleißes einzelner Getriebeteile resultierenden Reparaturen. Letztere führen zu Ausfallzeiten, die bei hochentwickelten Maschinen oder Automatensystemen recht kostspielig sind. Darüber hinaus sind allein die Herstellungskosten solcher Getriebe recht hoch.

Es erscheint daher geboten, ein Koppelrastgetriebe zu entwickeln, welches, neben den diesem Getriebetyp innewohnenden Vorteilen (geeignet zum Übertragen großer Kräfte und für hohe Drehzahlen), auch insbesondere bezüglich der erreichbaren Rastgüte sowie weiterer Einsatz- und Verstellungsmöglichkeiten sich vom Stand der Technik abhebt.

Zur Erhöhung der Rastgüte in « Zur Weiterentwicklung der Koppelrastgetriebe », Feinwerktechnik 1950 H. I. Seiten 11 und 13 wurde bereits ein viermaliger Koppelpunktdurchlauf während der Rastperiode bekannt, was aber mit dem Nachteil verbunden ist, daß sich durch ein zusätzlich erforderliches weiteres Vorschaltgetriebe die Gesamtgliederzahl auf 10 bzw. 14 bei Doppelrastgetrieben in unvorteilhafter Weise erhöht.

Weiterhin ist aus der DE-PS 670 678 ein achtgliedriges Koppelrastgetriebe bekannt, welches schwingend arbeitet und eine offene Koppelkurve mit zweimaligem Koppelpunktdurchgang im Rastbereich aufweist. Dabei ist einem Schubkurbelbetrieb ein weiteres Bogenschubkurbelgetriebe nachgeschaltet, dessen Kurbel aber nicht voll umläuft. Dadurch wird die Koppelkurve nur zum Teil durchlaufen.

Während bei diesem Getriebe einer eventuellen Einstellbarkeit von Lage und Dauer der Rast sowie der Hublänge enge Grenzen gesetzt sind, ist darüber hinaus auch nur eine angenäherte Rast erreichbar, deren Anfang und Ende fließende Übergänge aufweisen.

Aus diesem Stand der Technik sind die Merkmale nach dem Oberbegriff des Anspruch 1 der Erfindung bekannt.

Der Erfindung liegt daher die Aufgabe zugrunde, ein Koppelrastgetriebe mit nur wenigen Gelenkgliedern zu schaffen, dessen Koppelkurve dennoch die Verwirklichung einer präzisen und genau begrenzten Rast ermöglicht.

Diese Aufgabe wird erfindungsgemäß durch die Merkmale des Anspruchs 1 gelöst.

Vorteilhafte Weiterbildungen der Erfindung sind in den abhängigen Ansprüchen 2-10 aufgeführt.

Die scharfe Trennung der Koppelkurve in zwei Kurvenzüge durch einen Momentanpol sowie der nur sehr kurze, der Rasterzeugung dienende Kurvenzug ermöglichen zum einen eine genau definierte Begrenzung der Rast und eine aufgrund der Kürze des rasterzeugenden Kurvenzuges ausgesprochen präzise Annäherung an die Sollwerte.

Das universell verwendbare Grundgetriebe zur Erzeugung der Koppelkurve ist problemlos mit jedem beliebigen Antrieb koppelbar und läßt sich beispielsweise auch vom Hauptantrieb der jeweiligen Maschine ableiten.

Weitere, dem erfindungsgemäßen Koppelrastgetriebe innewohnende Vorteile sind : Sehr großer Rastwinkel (180° und mehr), große Abtriebsschwingwinkel (60°-180°), günstige Kleinstübertragungswinkel (nicht unter 40°), stufenlose, voneinander unabhängige Verstellmöglichkeiten von Rastwinkel und Abtriebsschwingwinkel sowie lange Abtriebshebelarme zur Erzeugung großer Drehmomente.

Neben dem Einsatz in Maschinen und Vorrichtungen, von denen sehr häufig die Übertragung großer Kräfte und Drehmomente gefordert wird, ist dieses Getriebe insbesondere aufgrund der damit möglichen hohen Rastgüte auch für ausgesprochene Präzisionsmaschinen, zu denen auch die Druckmaschinen gehören, geeignet.

Die Erfindung ist anhand von Ausführungsbeispielen in den Zeichnungen näher erläutert. Es zeigt :

Figur 1 das erfindungsgemäße Koppelrastgetriebe, wobei der Antreib über einen Schubkurbeltrieb erfolgt,

Figur 2 das Verhältnis der Bewegungsgrößen $\varphi$, $\psi$ und den Verstellbereich von $\varphi_R$ (gestrichelte Linie),

Figur 3 eine weitere Antriebsalternative mittels Antriebskurbel und Kulissenführung, geeignet für einen stark ungleichförmigen Betrieb im Vor- und Rücklauf der Antriebsschwinge,

Figur 4 die Beziehung zwischen Abtriebsschwingwinkel ψ und Kurbelwinkel φ gemäß Ausführung nach Figur 3,

Figur 5 ein Kombinationskoppelrastgetriebe für beispielsweise zwei gleichgroße Rastwinkel mit einer Verstellmöglichkeit derselben als weiterführende Variante des rasterzeugenden Grundgetriebes,

Figur 6 die für die Ausführung gemäß Figur 5 geltende Beziehung zwischen den Rastwinkeln $\varphi_{R'}$ $\varphi_{R''}$ und Abtriebsschwingwinkel ψ,

Figur 7 das Grundgetriebe nach Figur 1 in einem ersten Anwendungsfall als Antriebs- und Steuermechanismus eines Prägetiegels in Tiegeldruckmaschinen,

Figur 8 das Doppelrastgetriebe nach Figur 5 als Antrieb für einen Farb- oder Feuchtheber in Offset- oder Hochdruckmaschinen und

Figur 9 eine Möglichkeit, die Bewegungsübertragung und Rasterzeugung mit nur einem Abtriebshebel durchzuführen.

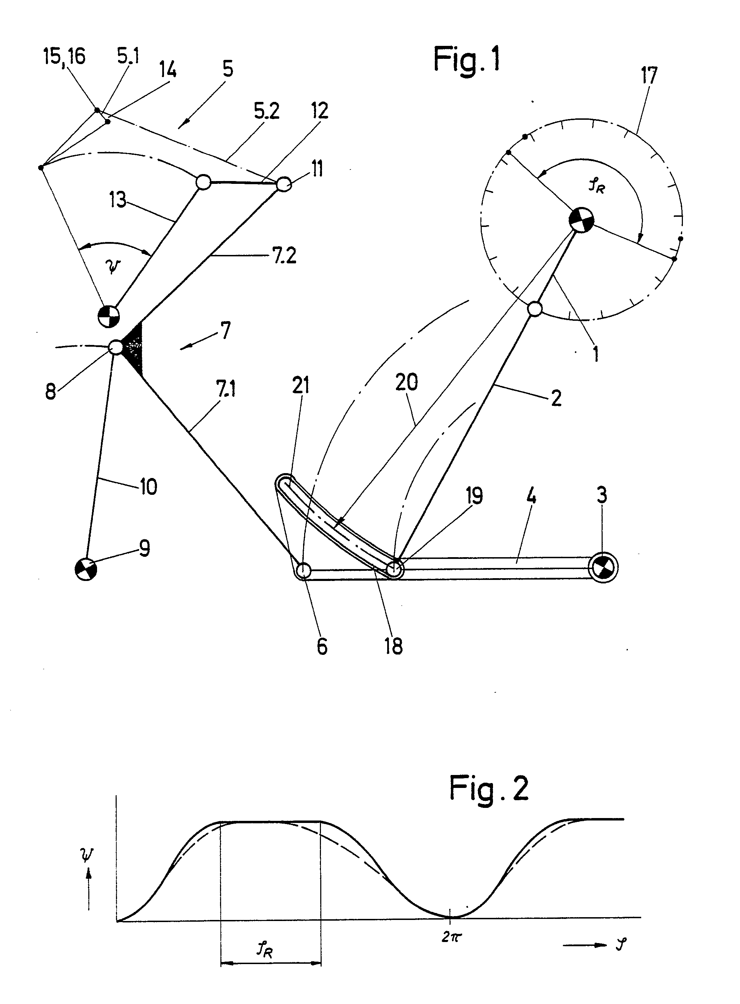

Bei der in Figur 1 dargestellten Grundausführung des Koppelrastgetriebes erfolgt der Antrieb mittels Schubkurbelgetriebe über eine Antriebskurbel 1 sowie eine daran angelenkte Koppel 2, welche an der am Gestellpunkt 3 gelagerten Antriebsschwinge 4 des die ausgeprägte Koppelkurve 5 erzeugenden Gelenkviereckes angelenkt ist. Besagtes Gelenkviereck setzt sich weiter zusammen aus der bereits erwähnten Antriebsschwinge 4, einer daran am Gelenkpunkt 6 angeschlossenen doppelarmigen Koppel 7 sowie einer, an der Verbindungsstelle 8 ihrer beiden Arme 7.1, 7.2 angelenkten weiteren, im Gestellpunkt 9 gelagerten Schwinge 10. Am Endpunkt 11 des abtriebsseitigen Koppelarmes 7.2 greift eine rasterzeugende Schwinge 12 eines, dem Gelenkviereck 3, 6, 8, 9 nachgeschalteten Abtriebszweischlages 12, 13 an. Die daran angeschlossene Abtriebsschwinge 13 bringt die Bewegungsableitung mit der zwischengeschalteten Rast. Die mit dem dargestellten Gelenkviereck 3, 6, 8, 9 erzeugte Koppelkurve 5 läßt sich in einen kurzen, der Rasterzeugung dienenden Kurvenzug 5.1 und einen, unter einem Winkel 14 langgestreckten, die Bewegungsableitung hervorbringenden Kurvenzug 5.2 trennen.

Beide Kurvenzüge 5.1, 5.2 sind durch einen Knickpunkt oder eine Spitze 15, welche die Koppelkurve 5 auf ihrer Bahn durchläuft, scharf voneinander getrennt, wobei die besagte Spitze 15 der Koppelkurve 5 mit einem Momentanpol 16 identisch ist, der somit auch Anfang und Ende der Rast markiert. Von dem Grundgedanken ausgehend, diesen speziellen Kurvenverlauf der ·Koppelkurve 5 zu verwirklichen, der darüber hinaus durch einen sich deckenden Hin- und Rückgang gekennzeichnet sein soll, sind die Abmessungen und Lagen des Gelenkviereckes 3, 6, 8, 9 mit Hilfe des Polortkurvenverfahrens zu ermitteln. Das Zusammenfügen zu der vorliegenden Getriebeeinheit kann in einer synthetisch empirischen Vorgehensweise gelöst werden, wie es jedem Getriebefachmann geläufig ist.

Die mit diesem Getriebe 1, 2, 4, 7, 10, 12, 13 erzeugbare Rast ist als Rastwinkel $\varphi_R$ auf der Kreisbahn 17 der Antriebskurbel 1 dargestellt.

Zwecks Verstellung der Rastdauer von einem Größtwert stufenlos bis Null herunter ohne Veränderung des Abtriebsschwingwinkels, erhält die Antriebsschwinge 4 einen Verstellschlitz 18, mit dessen Hilfe der Angriffspunkt 19 der antreibenden Koppel 2 auch während des Betriebes stufenlos einstellbar ist. Der Krümmungsradius 20 der Schlitzmittellinie 21 ist dabei in der äußeren Totlage des Getriebes zu bestimmen. Die Verstelleinrichtungen, sowohl für manuelles als auch für automatisches Verstellen, sind recht vielfältig und bedürfen keiner weiteren Präzisierung.

Das in Figur 2 dargestellte Weg-Zeitdiagramm veranschaulicht die Beziehung zwischen Kurbelwinkel φ und Abtriebsschwingwinkel ψ sowie den Verstellbereich des Rastwinkels $\varphi_R$ (gestrichelte Linie).

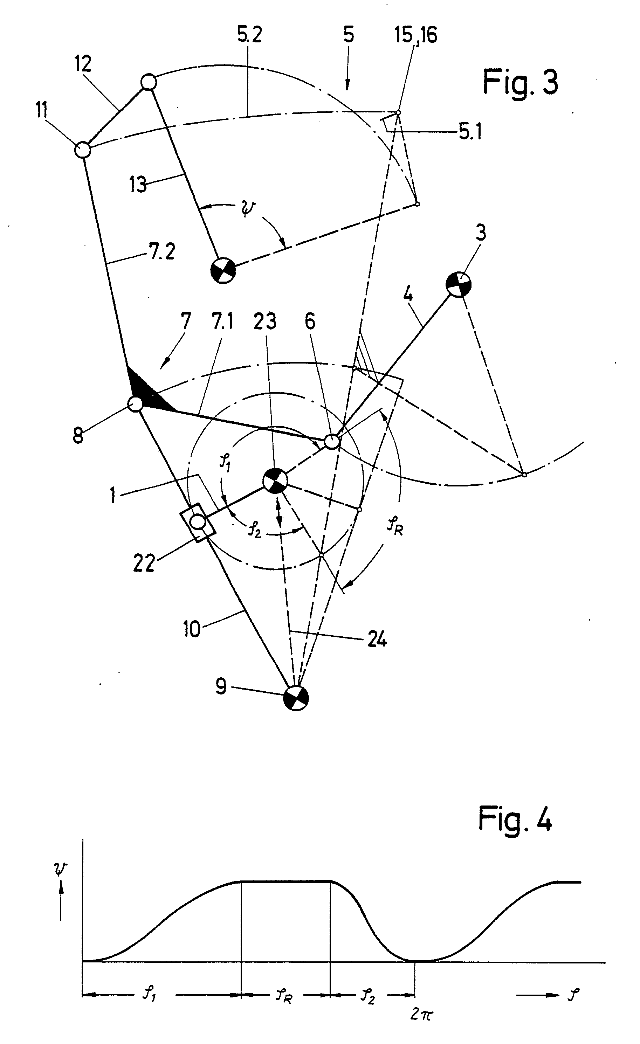

Figur 3 zeigt eine weitere Antriebsalternative für das rasterzeugende Grundgetriebe 4, 7, 10, 12, 13. Dabei treibt eine Antriebskurbel 1 über eine Kulissenführung 22 die Schwinge 10 des Gelenkviereckes 3, 6, 8, 9 an, die nunmehr als Antriebsschwinge wirkt.

Eine Verstellmöglichkeit der Rastdauer ergibt sich dabei dadurch, daß der Lagerpunkt 23 der Antriebskurbel 1 verschiebbar ist und zwar dahingehend verschiebbar, daß er sich auf der Verbindungslinie 24 zum Gestellpunkt 9 der Schwinge 10 mittels nicht näher dargestellter Bewegungsmittel bewegen kann. Dadurch ist der Schwenkwinkel der Schwinge 10 stufenlos verstellbar.

Das Verhältnis der Bewegungsgrößen φ, ψ bei einem Getriebeaufbau gemäß Figur 3 ist aus der Figur 4 ersichtlich. Es zeigt sich dabei eine starke Ungleichförmigkeit im Vor- und Rücklauf der Abtriebsschwinge, ersichtlich aus dem sehr unsymmetrischen Kurvenverlauf der Kurbelwinkel $\varphi_1$ und $\varphi_2$ in Relation zum Abtriebsschwingwinkel ψ. Diese Ausführungsform eignet sich deshalb für solche Aufgaben, die einen derart ungleichförmigen Betrieb fordern.

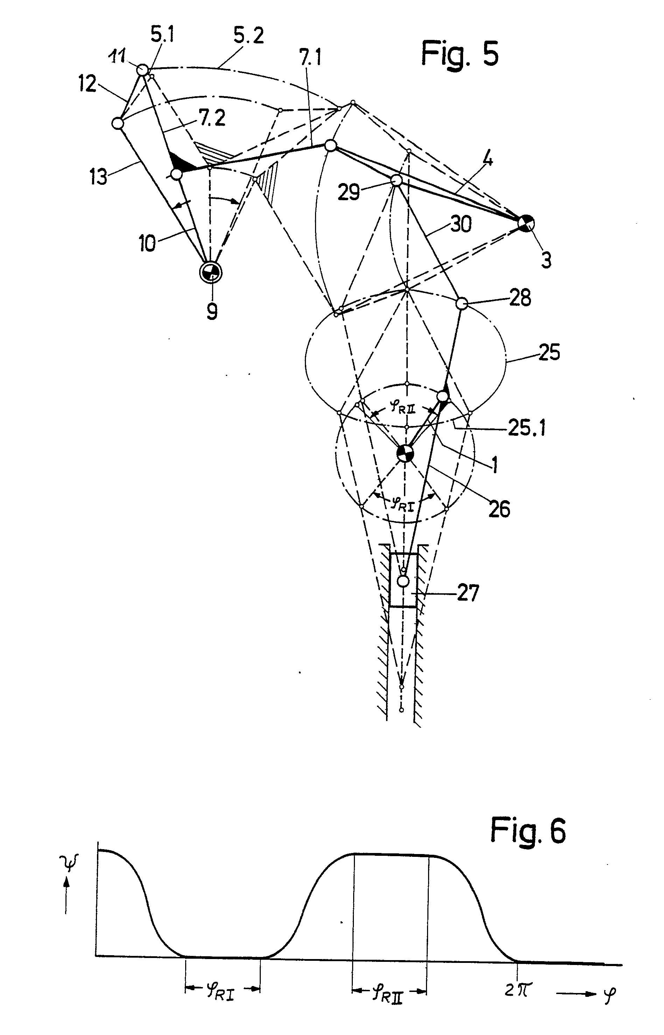

Figur 5 zeigt eine erweiterte Anwendung des erfindungsgemäßen Koppelrastgetriebes. Dieses Kombinationskoppelrastgetriebe dient der Erzeugung von zwei Rasten $\varphi_{R'}$, $\varphi_{R''}$. Zu diesem Zweck ist dem eigentlichen Grundgetriebe 4, 7, 10, 12, 13 ein weiteres Koppelrastgetriebe herkömmlicher Art vorgeschaltet. Dieses erhält seinen Antrieb von einer zentrischen Koppelkurve 25 eines vorhandenen Schubkurbelgetriebes, bestehend aus der Antriebskurbel 1, der Schubstange 26 mit Kulisse 27 sowie einer, am abtriebsseitigen Koppelpunkt 28 der Schubstange 26 angelenkten und durch den Anlenkpunkt 29 mit der Antriebsschwinge 4 des Grundgetriebes 4, 7, 10, 12, 13 verbundenen Verbindungsstange 30. Der Antrieb des Schubkurbelgetriebes könnte dabei auch über die Hubbewegung der Kulisse 27 erfolgen.

Es handelt sich letztlich um eine Hintereinanderschaltung zweier Rastgetriebe zur Erzeugung, in diesem Falle, zweier gleichgroßer Rasten. Auch bei diesem Getriebe sind die bereits eingangs erwähnten Verstellmöglichkeiten gegeben.

Die für dieses Kombinationskoppelrastgetriebe geltende Beziehung zwischen Kurbelwinkel $\varphi$ und dem Abtriebsschwingwinkel $\psi$ ist in Figur 6 dargestellt. Die Rastwinkel $\varphi_{R'}$ und $\varphi_{R''}$ sind als waagrechte Linien eingezeichnet, wobei zu bemerken ist, daß die mit dem herkömmlichen Rastgetriebe (Schubkurbelgetriebe) erzielbare Rastgüte der Rast $\varphi_{R'}$ aufgrund der nur angenäherten Kreisbogenform des rasterzeugenden Kurvenzuges 25.1 der zentrischen Koppelkurve 25 hinter der Güte der Rast $\varphi_{R''}$ zurückbleibt.

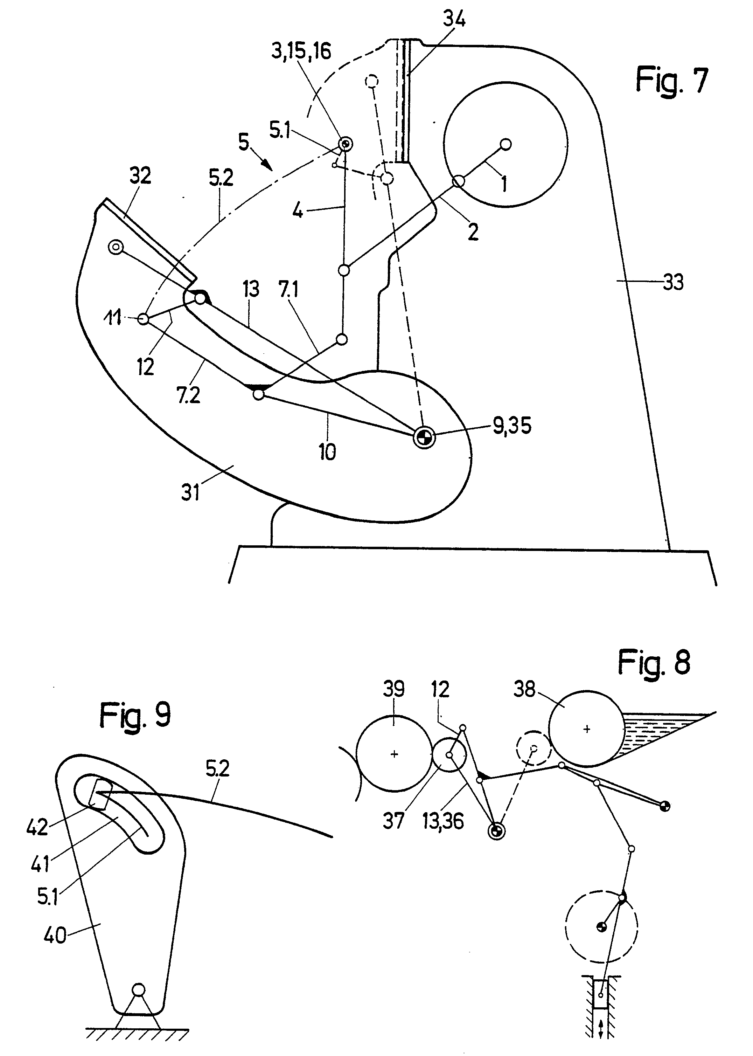

Einen ersten Anwendungsfall des Grundgetriebes zeigt Figur 7. Dabei ist die Abtriebsschwinge 13 mit dem Schwenkhebel 31 des Tiegels 32 einer Tiegeldruckmaschine 33 gekoppelt. Seine Rastposition entspricht dabei der Anlage des Tiegels 32 an der Gegendruckplatte 34, wobei es insbesondere bei Prägetiegeln darauf ankommt, daß während des Druck- bzw. Prägevorganges die Andrückkraft des Tiegels 32 möglichst konstant bleibt. Der Antrieb des Grundgetriebes 4, 7, 10, 12, 13 erfolgt im vorliegenden Anwendungsfall beispielsweise über Antriebskurbel 1 sowie Koppel 2.

Die Gestellpunkte 3, 5, 9 von Abtriebsschwinge 13 und zweiter Schwinge 10 des Gelenkviereckes sind der Einfachheit halber zusammengelegt. Ebenfalls ist hier in einem Sonderfall der gestellfeste Gelenkpunkt 3 der Antriebsschwinge 4 mit der Spitze 15 der Koppelkurve 5, die gleichzeitig Momentanpol 16 ist, identisch.

Ein Anwendungsbeispiel des Kombinationskoppelrastgetriebes gemäß Figur 5 zeigt letztlich die Figur 8. Die Abtriebsschwinge 13 des rasterzeugenden Zweischlages 12, 13 eignet sich dabei in besonders vorteilhafter Weise als Schwenkhebel 36 für Farb- oder Feuchthebel 37 in Offset- oder Hochdruckmaschinen. Es ist dabei ein, bezüglich der Güte zumindest einer Rast, gleichwertiger Ersatz für die bisher für diesen Verwendungszweck gebräuchlichen Kurvengetriebe geschaffen. Dabei kann die Anordnung des Kombinationskoppelrastgetriebes derart erfolgen, daß entsprechend den Erfordernissen die Rast mit der höheren Güte mit der Anlage des Hebers 37 an der Farbkastenwalze 38 oder auch mit der Anlage an der nachfolgenden Farbwerkwalze 29 übereinstimmt.

Für die genannten sowie weitere Anwendungsfälle besteht letztlich, wie in Figur 9 dargestellt, gegebenenfalls die Möglichkeit, die rasterzeugende Schwinge 12 sowie die Abtriebsschwinge 13 zu einem Bauteil zusammenzufassen. Der hierfür vorgesehene Abtriebshebel 40 ist zu diesem Zweck mit einem, dem rasterzeugenden kurzen Kurvenzug 5.1 entsprechenden Führungsschlitz 41 versehen, in welchem der als Gleitstein 42 ausgeführte Endpunkt 11 des abtriebsseitigen Koppelarmes 7.2 des schwingenden Gelenkviereckes sich bewegt. Gestaltet man das besagte Gelenkviereck zugleich als Bohr- bzw. Fräsvorrichtung, so läßt sich der genaue Führungsschlitz 41 im Abtriebshebel 40 herstellen. Die absolute Rastgenauigkeit ist damit gewährleistet.

Die Erfindung ist natürlich keinesfalls auf die dargestellten Ausführungsformen und Verwendungszwecke beschränkt. Das der Erzeugung der Koppelkurve dienende universelle Grundgetriebe erlaubt nämlich mit einem vorgeschalteten mehrgliedrigen Gelenkgetriebe unterschiedlichste Getriebekombinationen, so daß von einem Punkt einer Koppel-, Schub- oder Kreisbewegung aus die Antriebsherleitung für das Grundgetriebe erfolgen kann. Insbesondere bei der Ausführung nach Figur 5 kann die Bewegungsherleitung (Antrieb) von jedem beliebigen Punkt einer Schubebene erfolgen.

Weiterhin bestehen in Abänderung der jeweiligen Getriebegeometrie mannigfaltige Möglichkeiten der Zusammenlegung verschiedener Gestellpunkte. Weiterhin ist es mit diesem Getriebe auf einfache Art und Weise möglich, die aus einer Schwenkbewegung der Abtriebsschwinge sich ergebende Rast als Stillstand einer Hubbewegung eines in Längsrichtung geführten Stößels umzuwandeln.

Teileliste

| | |
|---|---|
| 1 | Antriebskurbel |
| 2 | Koppel |
| 3 | Verstellpunkt |
| 4 | Antriebsschwinge |
| 5 | Koppelkurve |
| 5.1 | Kurzer Kurvenzug |
| 5.2 | Langgestreckter Kurvenzug |
| 6 | Gelenkpunkt |
| 7 | Doppelarmige Koppel |
| 7.1 | Koppelarm |
| 7.2 | Abtriebseitiger Koppelarm |
| 8 | Verbindungsstelle |
| 9 | Gestellpunkt |
| 10 | Schwinge |
| 11 | Endpunkt (Gelenk) |
| 12 | Rasterzeugende Schwinge (Lenker) |
| 13 | Abtriebsschwinge |
| 14 | Winkel |
| 15 | Spitze |
| 16 | Momentanpol |
| $\varphi_R$ | Rastwinkel |
| 17 | Kreisbahn |
| 18 | Verstellschlitz |
| 19 | Angriffspunkt |
| 20 | Krümmungsradius |
| 21 | Schlitzmittellinie |
| $\varphi$ | Kurbelwinkel |
| $\psi$ | Abtriebsschwingwinkel |
| 22 | Kulissenführung |
| 23 | Lagerpunkt |
| 24 | Verbindungslinie |
| 25 | Zentrische Koppelkurve |
| 26 | Schubstange |
| 27 | Kulisse |
| 28 | Koppelpunkt |

| 29 | Anlenkpunkt |
|---|---|
| 30 | Verbindungsstange |
| 31 | Schwenkhebel |
| 32 | Tiegel (Prägetiegel) |
| 33 | Tiegeldruckmaschine |
| 34 | Gegendruckplatte |
| 35 | Gestellpunkt |
| 36 | Schwenkhebel |
| 37 | Farbheber, Feuchtheber |
| 38 | Farbkastenwalze |
| 39 | Farbwerkwalze |
| 40 | Abtriebshebel |
| 41 | Führungsschlitz |
| 42 | Gleitstein |

## Patentansprüche

1. Getriebe (4, 7, 10, 12, 13) zur Ausführung von Bewegungen mit eingeschalteten Stillstandszeiten eines Abtriebsgliedes (13), bestehend aus einem schwingfähigen Gelenkviereck (3, 6, 8, 9) mit den zugeordneten Gelenkgliedern (4, 7, 10), wobei die Koppelkurve (5) nur teilweise durchlaufen wird und im Hin- und Rücklauf deckungsgleich ist, sowie einem rasterzeugenden Abtriebszweischlag (12, 13), dadurch gekennzeichnet, daß die Koppelkurve (5) auf ihrer Bahn einen, Anfang und Ende der Rast markierenden Knickpunkt (15) aufweist, welcher die Koppelkurve (5) in zwei Kurvenzüge (5.1, 5.2) teilt, wobei ein kurzer Kurvenzug (5.1) der Rasterzeugung dient und ein unter einem Winkel (14) langgestreckter Kurvenzug (5.2) die Bewegungsableitung hervorbringt, während der Knickpunkt (15) der Koppelkurve (5) mit dem Momentanpol (16) des schwingfähigen Gelenkviereckes (3, 6, 8, 9) in dieser Getriebestellung und dem Anlenkpunkt (11) des rasterzeugenden Abtriebszweischlages (12, 13) identisch ist.

2. Getriebe nach Anspruch 1, dadurch gekennzeichnet, daß an der Antriebsschwinge (4) des Gelenkviereckes (3, 6, 8, 9) zwischen ihrem Gestellpunkt (3) und einem endseitig angeordneten Gelenkpunkt (6) an einem Angriffspunkt (19) die Koppel (2) eines Schubkurbelgetriebes (1, 2) angreift, daß an dem endseitig angeordneten Gelenkpunkt (6) der Antriebsschwinge (4) eine doppelarmige Koppel (7) angreift, wobei an der Verbindungsstelle (8) ihrer beiden Arme eine zweite Schwinge (10) des Gelenkviereckes (3, 6, 8, 9) gelagert ist, und daß weiterhin am abtriebsseitigen Koppelarm (7.2) besagter Koppel (7) eine rasterzeugende Schwinge (12) angreift, an deren anderen Ende die Abtriebsschwinge (13) angelenkt ist.

3. Getriebe nach Anspruch 2, dadurch gekennzeichnet, daß die Antriebsschwinge (4), ausgehend von dem Angriffspunkt (19), einen kreisbogenförmigen Verstellschlitz (18) aufweist, wobei der Krümmungsradius (20) der Schlitzmittellinie (21) durch die äußere Totlage des Schubkurbelgetriebes (1, 2) gebildet wird, um so über eine Verschiebung des Angriffspunktes (19) der antreibenden Koppel (2) eine Verstellung der Rastdauer von einem Maximum ausgehend bis Null zu erreichen, ohne Veränderung des Abtriebsschwingwinkels $\psi$.

4. Getriebe nach Anspruch 3, dadurch gekennzeichnet, daß die Verstellung der Rastdauer auch während des Betriebes erfolgen kann.

5. Getriebe nach Anspruch 1, dadurch gekennzeichnet, daß eine Schwinge (10) des Gelenkviereckes (3, 6, 8, 9) mit einer antreibenden Kurbel (1) über eine Kulissenführung (22) direkt verbunden ist.

6. Getriebe nach Anspruch 1, dadurch gekennzeichnet, daß zur Erzeugung von zwei Rastwinkeln ($\varphi_{RI}$, $\varphi_{RII}$) und eines gemeinsamen Abtriebsschwingwinkels ($\psi$) dem rasterzeugenden Grundgetriebe (4, 7, 10, 12, 13) im Koppelpunkt (28) über eine Verbindungsstange (30) ein weiteres Rastgetriebe vorgeschaltet ist, welches seinen Antrieb von einer zentrischen Koppelkurve (25) eines vorhandenen Schubkurbelgetriebes (1, 26, 27) ableitet.

7. Getriebe nach Anspruch 1, dadurch gekennzeichnet, daß die Antriebsherleitung aus einer geradlinigen Schubkurbelbewegung von jeder beliebigen Stelle der Schubebene aus abnehmbar ist.

8. Getriebe nach Anspruch 1, dadurch gekennzeichnet, daß die Abtriebsschwinge (13) des Grundgetriebes (4, 7, 10, 12, 13) als Antriebsgelenk für einen Prägetiegel (32) einer Tiegeldruckmaschine (33) verwendet wird, wobei die Prägestellung des Tiegels (32) mit der Raststellung des Abtriebsschwinge (13) identisch ist.

9. Getriebe nach Anspruch 6, dadurch gekennzeichnet, daß die, eine Doppelrast erzeugende Abtriebsschwinge (13) des Doppelrastgetriebes (4, 7, 10, 12, 13 ; 1, 26, 27, 30) als Schwenkhebel (36) eines Hebers (37) in Farb- oder Feuchtwerken von Druckmaschinen verwendet wird, wobei die Endstellungen des Hebers (37) mit den Raststellungen identisch sind.

10. Getriebe nach Anspruch 1, dadurch gekennzeichnet, daß die Bewegungsübertragung und Rasterzeugung über einen Abtriebshebel (40) erfolgt, der mit einem, dem rasterzeugenden kurzen Kurvenzug (5.1) entsprechenden Führungsschlitz (41) versehen ist, in welchem der als Gleitstein (42) ausgeführte Endpunkt (11) des abtriebsseitigen Koppelarmes (7.2) des schwingenden Gelenkviereckes (3, 6, 8, 9) sich bewegt.

## Claims

1. Mechanism (4, 7, 10, 12, 13) for performing movements with switched on dwell times of an output element (13) comprising an oscillating four-bar linkage (3, 6, 8, 9) with the related pivoted elements (4, 7, 10) with the mechanism passing through the coupler curve (5) only partially and the latter being matching in the forward and return movement, as well as a pair of output binary links connected in series (12, 13) which produce a dwell characterised by the fact that the coupler curve (5) in its path has a break point (15) marking the start and the end of the dwell which divides the coupler curve (5) into two curve sections (5.1, 5.2), with a short section of curve (5.1) serving to produce the dwell and a long extended section of curve (5.2) below an angle (14) causes the derivation of the movement while the break point (15) of the coupler curve (5) is identical to the instantaneous centre of rotation (16) of the oscillating four-bar linkage (3, 6, 8, 9) in this position of the mechanism and to the point of articulation (11) of the pair of outut binary links connected in series (12, 13).

2. Mechanism according to Claim 1 characterised by the fact that the coupler (2) of a slider crank mechanism (1, 2) makes contact at a point of contact (19) on the drive rocker (4) of the four-bar linkage (3, 6, 8, 9) between ist point on a frame (3) and a pivot point (6) located at the end, that a double-armed coupler (7) makes contact at the pivot point (6) of the input rocker (4) located at the end, with a second rocker (10) of the four-bar linkage (3, 6, 8, 9) being mounted at the connection point (8) of its two arms, and that additionally a rocker (12) producing a dwell makes contact at the coupling arm (7.2) at the output end of said coupler (7), drive rocker (13) being pivoted at the other end of said rocker (12).

3. Mechanism according to Claim 2 characterised by the fact that the drive rocker (4) starting from the point of contact (19), has an arch-shaped adjusting slot (18), the radius of the curvature (20) of the centre line of the slot (21) being formed by the outer dead centre position of the slider crank mechanism (1, 2) to thus achieve an adjustment of the dwell time starting from a maximum to zero through a shift in the point of contact (19) without altering the output oscillating angle $\psi$.

4. Mechanism according to Claim 3 characterised by the fact that the dwell time may also be adjusted when the mechanism is in operation.

5. Mechanism according to Claim 1 characterised by the fact that a rocker (10) of the four-bar linkage (3, 6, 8, 9) is directly connected to a driving crank (1) by means of a slotted link guide (22).

6. Mechanism according to Claim 1 characterised by the fact that, to produce two dwell angles ($\varphi_{RI}$, $\varphi_{RII}$) and a common output oscillation angle ($\psi$) a further dwell mechanism which derives its drive from a centered coupler curve (25) of an existing slider crank mechanism (1, 26, 27) is positioned ahead of the dwell-generating basic mechanism (4, 7, 10, 12, 13) in the coupler point (28) by means of a connecting rod (30).

7. Mechanism according to Claim 1 characterised by the fact that the derivation of the drive can be taken from a straight-line slider crank movement at any desired point of the thrust plane.

8. Mechanism according to Claim 1 characterised by the fact that the output rocker (13) of the basic mechanism (4, 7, 10, 12, 13) is used as the drive link for a platen (32) of a platen press (33) with the embossing position of the platen (32) being identical to the dwell position of the output rocker (13).

9. Mechanism according to Claim 6 characterised by the fact that the output rocker (13) of the double dwell mechanism (4, 7, 10, 12, 13 ; 1, 26, 27, 30) which produces a double dwell is used as the swivel lever (36) of a lifter (37) in inking or dampening units of printing presses, the end positions of the lifter (37) being identical to the dwell positions.

10. Mechanism according to Claim 1 characterised by the fact that the movement is transmitted and the dwell produced by an output lever (40) which is provided with a guide slot (41) corresponding to the short section of curve (5.1) which produces the dwell, the end point (11), in the form of a sliding block (42), of the coupling arm (7.2) at the output end of the oscillating four-bar linkage (3, 6, 8, 9) moving in said guide slot (41).

**Revendications**

1. Transmission (4, 7, 10, 12, 13) pour l'exécution de déplacements, avec des temps d'arrêts intercalaires, d'un organe mené (13), constituée par un quadrilatère articulé (3, 6, 8, 9) comportant des éléments associés d'articulation (4, 7, 10), la trajectoire (5) de l'extrémité de la bielle n'étant parcourue que partiellement et étant identique lors du mouvement aller et lors du mouvement retour, ainsi que par un ensemble à deux bras oscillants (12, 13) produisant l'arrêt, caractérisée en ce que la trajectoire (5) de l'extrémité de la bielle possède sur son étendue un point anguleux (15) marquant le début et la fin de l'arrêt et qui subdivise la trajectoire (5) de l'extrémité de la bielle en deux éléments de trajectoire (5.1, 5.2), un élément de trajectoire court (5.1) servant à produire l'arrêt et un élément de trajectoire (5.2) allongé sur un angle (14) fournissant la dérivation du déplacement, tandis que le point anguleux (15) de la trajectoire (5) de l'extrémité de la bielle coïncide avec le centre instantané de rotation (7) du quadrilatère articulé (3, 6, 8, 9) qui est apte à osciller, dans cette position de la transmission, et avec le point d'articulation (11) de l'ensemble à deux bras oscillants (12, 13) produisant l'arrêt.

2. Transmission selon la revendication 1, caractérisée en ce que la bielle (2) d'un mécanisme bielle-manivelle (1, 2) attaque le bras oscillant d'entraînement (4) du quadrilatère articulé (3, 6, 8, 9) en un point d'attaque (19) entre le tourillon fixe (3) du bras oscillant d'entraînement et un point d'articulation (6) disposé du côté de l'extrémité, qu'une bielle (7) à deux bras attaque le bas oscillant d'entraînement (4) au niveau du point d'articulation (6) disposé vers l'extrémité, un second bras oscillant (10) du quadrilatère articulé (3, 6, 9) étant raccordé au point de liaison (8) des deux bras de cette bielle, et qu'en outre au bras (7.2), situé du côté mené, de ladite bielle (7) se trouve raccordé un bras oscillant (12) produisant l'arrêt, à l'autre extrémité duquel est articulé le bras oscillant mené (13).

3. Transmission selon la revendication 2, caractérisée en ce que le bras oscillant d'entraînement (4) comporte, à partir du point d'attaque (19), une fente de réglage (18) en forme d'arc de cercle, le rayon de courbure (20) de la ligne médiane (21) de la fente étant fourni par le point mort extérieur du mécanisme bielle-manivelle (1, 2) afin d'obtenir ainsi, au moyen d'un décalage du point d'attaque (19) de la bielle d'entraînement (2), un réglage de la durée de l'arrêt depuis un maximum jusqu'à la valeur zéro, sans modification de l'angle $\psi$ du bras oscillant mené.

4. Transmission selon la revendication 3, caractérisée en ce que le réglage de la durée de l'arrêt peut être également réalisé pendant le fonctionnement.

5. Transmission selon la revendication 1, caractérisée en ce qu'un bras oscillant (10) du quadrilatère articulé (3, 6, 9) est relié directement à une manivelle d'entraînement (1) par l'intermédiaire d'un guide de coulisse (22).

6. Transmission selon la revendication 1, caractérisée en ce que pour la production de deux angles d'arrêt ($\varphi_{RI}$, $\varphi_{RII}$) et d'un angle commun ($\psi$) du bras oscillant mené, en amont de la transmission de base (4, 7, 10, 12, 13) produisant l'arrêt se trouve montée, au niveau du point d'accouplement (28) et par l'intermédiaire d'une barre de liaison (30), une autre transmission à arrêts instantanés, qui tire son entraînement d'une trajectoire centrée (25) de l'extrémité de la bielle d'un mécanisme bielle-manivelle (1, 26, 27) existant.

7. Transmission selon la revendication 1, caractérisée en ce que l'obtention de l'entraînement à partir d'un déplacement rectiligne bielle-manivelle peut être réalisée en un point quelconque du plan de poussée.

8. Transmission selon la revendication 1, caractérisée en ce que le bras oscillant mené (13) de la transmission de base (4, 7, 10, 12, 13) est utilisé en tant qu'articulation d'entraînement pour une platine d'estampage (32) d'une machine d'impression à platine (33), la position d'estampage de la platine (32) étant identique à la position d'arrêt du bras oscillant mené (13).

9. Transmission selon la revendication 6, caractérisée en ce que le bras ocillant mené (13), qui produit un arrêt double, de la transmission double à arrêts instantanés (4, 7, 10, 12, 13 ; 1, 26, 27, 30) est utilisé en tant que levier pivotant (36) d'un preneur (37) dans des mécanismes d'encrage ou de mouillage de machines d'impression, les positions extrêmes du preneur (37) étant identiques aux positions d'arrêt.

10. Transmission selon la revendication 1, caractérisée en ce que la transmission du développement et l'obtention de l'arrêt sont réalisées au moyen d'un levier mené (40) qui est muni d'une fente de guidage (41) correspondant à l'élément de trajectoire court (5.1) produisant l'arrêt, et dans laquelle l'extrémité (11), réalisée sous la forme d'un coulisseau (42), du bras de bielle (7.2), situé du côté mené, du quadrilatère articulé oscillant (3, 6, 8, 9) se déplace.

Fig. 1

Fig. 2

Fig. 3

Fig. 4

2

## Fig. 5

## Fig. 6

0 063 717

Fig. 7

Fig. 9

Fig. 8

4